# EUROPEAN PATENT APPLICATION

(11) **EP 1 302 736 A2**
(43) Date of publication of application: **16.04.2003**
(21) Application number: 02079162.0
(22) Date of filing: 08.10.2002
(51) Int. Cl.: F26B 7/00, F26B 17/04, F26B 17/20, F26B 17/26

(54) **System for thickening and drying manure**

(30) Priority: 16.10.2001 NL 1019178
(71) Applicant: J.A. Niemeijer B.V., 7591 DB Denekamp (NL)
(72) Inventor: Niemeijer, Johannes Antonius, Deceased (NL)

(57) **Abstract**

The invention relates to a system for thicking and drying manure, originating from a shed or sty, in which a laminated thickener (1) separates a relatively thick and a relatively thin component of the manure. The separation process is stimulated by the use of a vibrating plate (17) located inside the laminated thickener (1). The vibrating plate moreover causes a further dehydration of the thick component, sunk to the bottom. The thick component thus obtained is dried on a conveyor track (5), positioned inside a central exhaust duct (4) in the shed or sty with the aid of warm air, taken from the shed or sty.

## Description

The invention relates to a system for thicking and drying manure, originating from a shed or sty, comprising a separator for separating a relatively thick component and a relatively thin component of the manure and a drier for drying the relatively thick component at least substantially with heat released in the shed or sty.

Systems of this kind are well known. The disadvantage of the known systems is that the thick component still contains relatively much water, which implies that the amount of heat released in the shed or sty is often insufficient and additional energy must be supplied in order to dry the manure to a sufficient extent. The invention substantially obviates this drawback and is characterised in that the separator comprises a laminated thickener, through which a flow of manure is fed from a bottom side towards a top side. Laminated thickeners as such are known, for example for cleaning water. For thicking manure, use is made of a stack of strips having a smooth surface, onto which a thick component of the manure will easily stick but of which a layer with a sufficient thickness will fall off under the influence of gravity.

A favourable embodiment according to another aspect of the invention is characterised in that the laminated thickener is provided with vibrating means, as a result of which a layer of deposited material will easily peel off the surface and drop to the bottom. Preferably, the bottom side of the laminated thickener ends in a point and is provided with a valve with which the thick component which has dropped to the bottom can be drawn off.

A favourable embodiment according to a further aspect of the invention is characterised in that the vibrating means comprise a vibrating plate, located near the pointed end of the bottom side and drive means, located outside the laminated thickener. Experimentally, it has been confirmed that a vibrating plate positioned in this manner effects a further thicking and dehydration of the thick component, present in the bottom part of the laminated thickener. Preferably, the vibrating plate is mounted in an at least substantially horizontal position under operational conditions.

A further favourable embodiment of the inventive system is characterised in that the valve is connected to a buffer space for thickened manure. Moreover, means of transport are provided for transporting the thickened manure towards a conveyor track, onto which the thickened manure is further dried. According to the state of the art, the manure can be dried with warm air, taken from the shed or sty. For that purpose, air that has been taken from the shed or sty by a central exhaust duct is fed to a drier, in which the conveyor track is positioned.

A very favourable embodiment according to a further aspect of the invention is characterised in that the conveyor track is placed inside a central exhaust duct in the shed or sty, which means that a separate dryer is no longer necessary.

A further favourable embodiment is characterised in that the central exhaust duct is provided with a measuring device for measuring a moisture content of the manure and with drive means, controlled by the measuring device. Also the transport means for transporting the thickened manure towards the conveyor track can be steered by the measuring device, which implies that product is obtained with a steady, previously determined moisture content is obtained. The buffer space contains a supply of thickened manure, for safeguarding the continuity of the process.

The invention also relates to a method for thicking and drying manure. The inventive method is characterised in that the manure is fed through a laminated thickener from a bottom side towards a top side, during which a vibrating plate is active for setting free solid layers of manure which stick to the laminated thickener and for further thicking the thick component thus obtained, after which the thick component is placed onto a conveyor track and fed trough a central duct system.

The invention will now be explained further, with a reference to the following figures, in which:
- Fig. 1: represents in a block diagram a system according to the invention;
- Fig. 2: represents more in detail the laminated thickener;
- Fig. 3: represents in cross-section a possible embodiment of the laminated thickener;
- Fig. 4A: schematically represents in top view a central exhaust duct provided with a conveyor track;
- Fig. 4B: schematically represents in side view a central exhaust duct provided with a conveyor track;
- Fig. 5A: schematically represents in top view a central exhaust duct provided with a worm conveyor;
- Fig. 5B: schematically represents in side view a central exhaust duct provided with a worm conveyor.

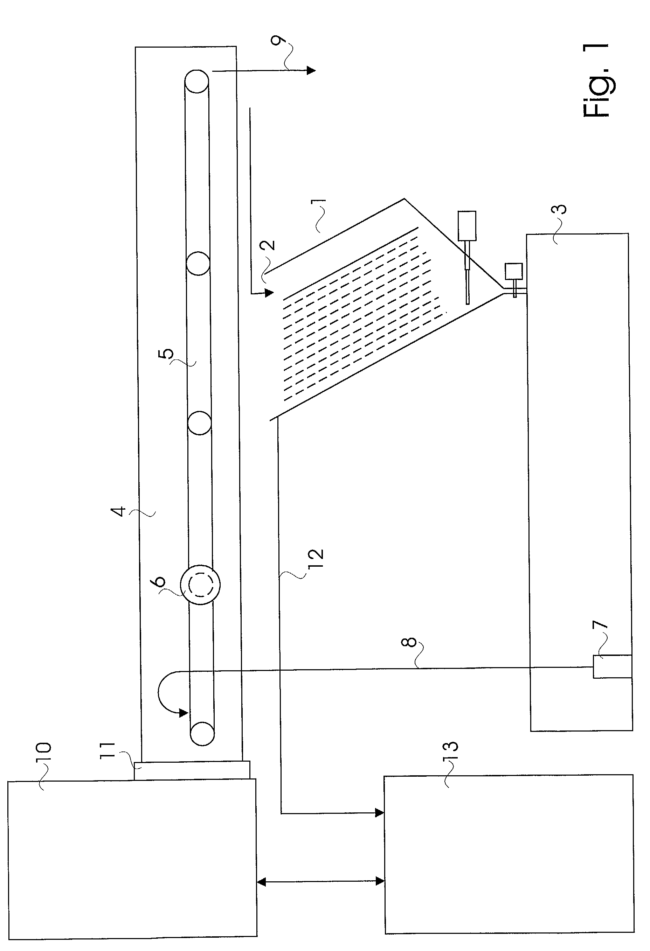

Fig. 1 represents in a block diagram a system according to the invention, consisting of a laminated thickener 1, to which manure is fed in a liquid form via an input 2. A thick fraction of the manure will accumulate near the bottom side of the laminated thickener and is conveyed to a buffer space 3. Moreover the system contains a central duct system 4, which is as such known in the art, which extends over the entire length of a shed or sty and which provides for the removal of used air. According to the invention, a conveyor track 5 is positioned inside the central duct system 4, driven by a motor 6, onto which the thick fraction of the manure, present in buffer space 3, is spread out with the aid of a pump 7 and a pressure pipe 8. Conveyor track 5 slowly moves this thick fraction in according with the counterflow principle, towards the end of conveyor track 5 where the manure 9, which has been dried sufficiently in the mean time, leaves the conveyor track. In the embodiment shown, conveyor track 5 is a transport belt, but it may well be realised in a different manner.

Central duct system 4 is, as usual, connected to an air washer 10, which is known as such, provided with a ventilator 11, in which the air originating from the shed or sty is cleaned before it is blown in the atmosphere.

The thinner fraction of the manure is fed, via a tube 12, to a thin fraction treatment unit 13 in which the nitrogen containing compounds present in the manure are decomposed in a so called nitrification-denitrification process in a manner which is known as such. The fumes and smells which are formed in this process are caught in air washer 10 and lead back to treatment unit 13, while the relatively clean water that is produced by treatment unit 13 is used by air washer 10.

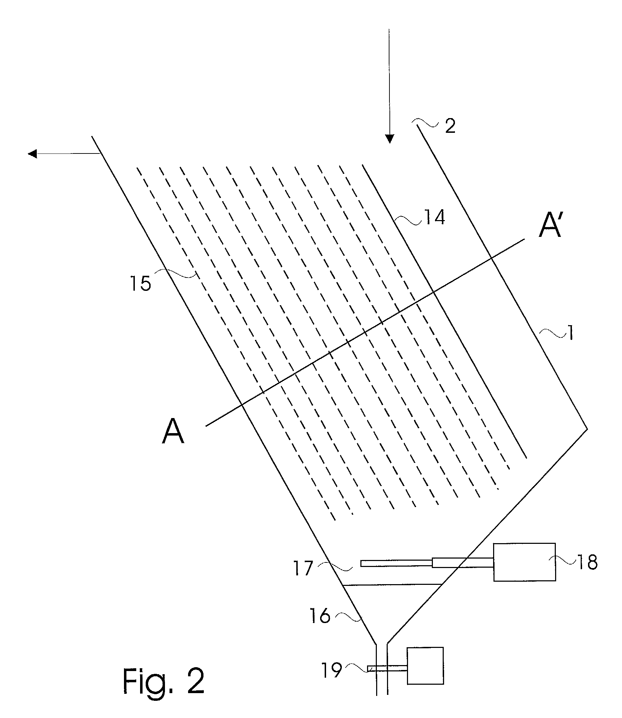

Fig. 2 represents more in detail the laminated thickener 1, in this embodiment consisting of a vessel having a rectangular cross section in which a partition 14 is placed in such a manner that a thick fraction, supplied via input 2, will flow downwards and next upwards inside a laminated thickener 15. Onto the walls of the laminated thickener 15 layers of thick, relatively dry manure will form, which on a certain point will come loose and drop downwards under the influence of gravity, where it will settle as a relatively thick fraction in a pointed end 16 of the laminated thickener. According to the invention, a vibrating plate 17 is placed in the bottom part of laminated thickener 1, driven by a motor 18, in a manner which is known as such. Vibrating plate 17 is preferably placed horizontally and the vibration direction is at least substantially vertical. The effect of vibrating plate 17 is twofold. In the first place, the layers of thick manure in laminated thickener 15 will easier come loose, which substantially eliminates a chance that laminated thickener will get obstructed. In the second place it turns out that the vibrations have a further dehydrating effect on the relatively dry component of the manure, present in the pointed end. When the thick component is dehydrated sufficiently, valve 19 is opened for a short time and the relatively thick component can flow into buffer space 3.

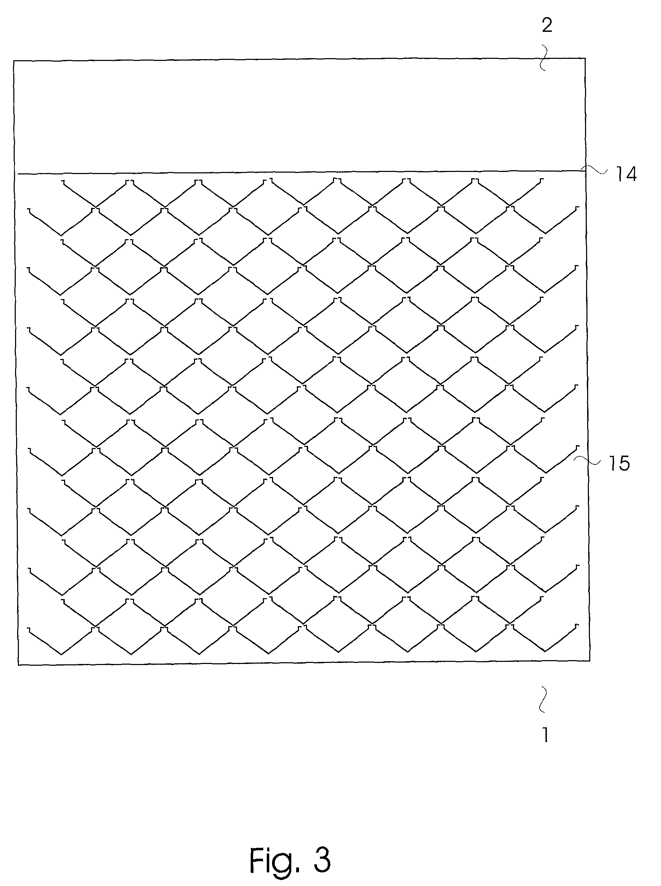

Fig. 3 represents in cross-section a possible embodiment of the laminated thickener 1, in which next to partition 14 the laminated thickener 15 is visible. The surfaces of laminated thickener 15 must be smooth, because otherwise the layers of thick, relatively dry manure that will form will not come loose. For obtaining a large surface area for laminated thickener 15 and for maintaining a sufficiently wide diameter for the channels in the stack of strips, an existing stack is chosen consisting of V-shaped strips which are stacked loosely or which are snapped or slided together and which can easily fill the available space. Important is the angle with the vertical line, under which the laminated thickener 15 is placed under operational conditions. If the angle is too small, the deposition of dry manure will be insufficient. If the angle is too large, the deposited manure will come loose less easy. A favourable choice is an angle in a range of 15 to 45 degrees. Preferably, the angle is chosen close to 30 degrees.

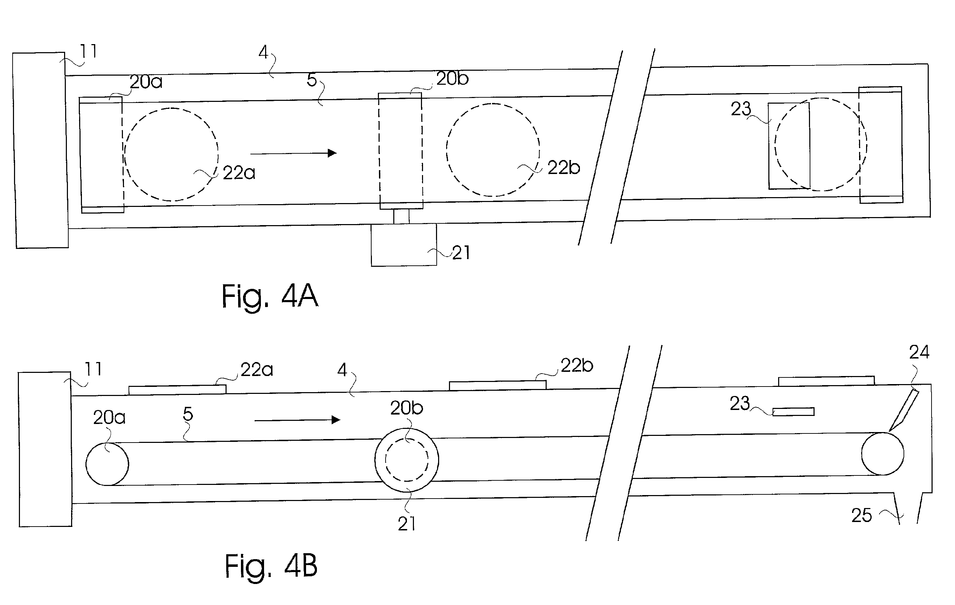

Fig. 4A schematically represents in top view a central exhaust duct 4 provided with a conveyor track 5, of which by way of illustration the top side of the exhaust duct has been removed. In this embodiment, conveyor track 5 is a transport belt, which runs on a number of rolls 20a,20b,.., of which in this embodiment roll 20b is provided with drive means in the form of a motor 21. The rolls are supported in an obvious manner by braces, not shown in the figure, which in turn are connected to the bottom or to the sidewalls of the exhaust duck. Exhaust duck 4 is provided with inlet openings 22a,22b,.. via which relatively warm air will enter, which is next exhausted by a ventilator 11. This warm air dries the manure, spread out over the conveyor track 5. At the end of exhaust duck 4 a known measuring device 23 is placed, which measures the moisture content of the manure which has been dried meanwhile. In a further obvious manner, motor 21 is steered dependent upon the moisture content, in a pursue to maintain the moisture content within a range of for example 30-40%. The drying of the manure can be improved further, by fabricating conveyor track 5 of a material, which will soak up fluid, for example linen reinforced with synthetic fibres, which will significantly increase the drying surface. Moreover, brushes or scrapers are placed in exhaust duck 4, with which the manure is regularly made loose from the conveyor track during the transport. Next to measuring device 23 and above conveyor track 5 another scraper is placed with which the manure is finally loosened, such that it will fall off on the end of the conveyor track.

Fig. 4B schematically represents in side view a central exhaust duct 4 provided with a conveyor track 5, in which by way of illustration the sidewall of the exhaust duck is removed. Conveyor track 5 runs on a number of rolls 20a,20b,.. The rolls are supported in an obvious manner by braces, not shown in the figure, which in turn are connected to the bottom or to the sidewalls of the exhaust duck. Moreover the inlet openings 22a,22b,.. are visible, via which relatively warm air will enter, which is next exhausted by a ventilator 11. At the end of exhaust duck 4 the known measuring device 23 is placed, and a scraper 24, with which the dried manure is scraped off the conveyor track. This dried manure next falls off conveyor track 5 into a chute 25, where it can be packed for example into sacks.

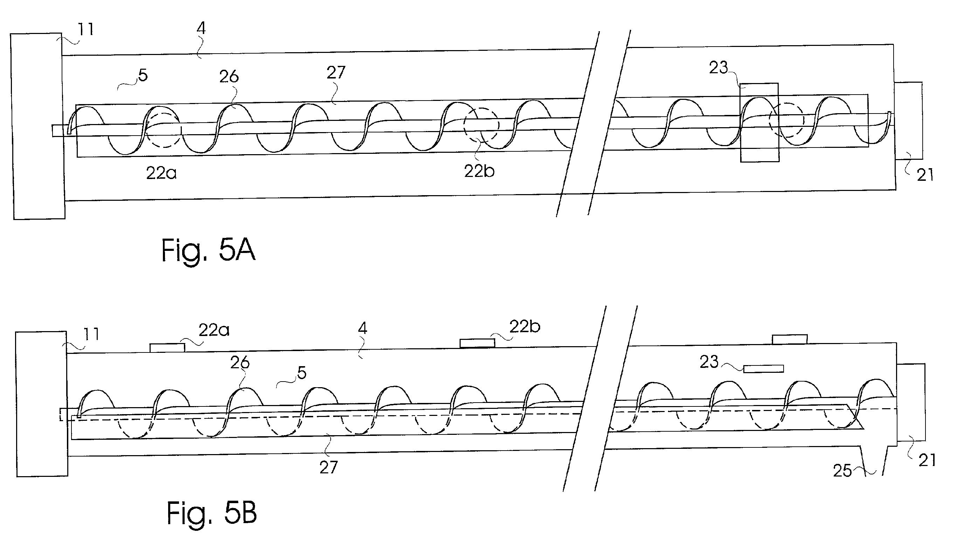

Fig. 5A schematically represents in top view a central exhaust duct 4 provided with a conveyor track 5, of which by way of illustration the top side of the exhaust duct has been removed. In this embodiment, conveyor track 5 is a worm 26 which runs inside a half open channel 27 and which is driven by a motor 21. Worm 26 is supported at regular distances in a further obvious manner by bearings, not shown in the figure, which in turn are connected to half open channel 27. Exhaust duck 4 is provided wit relatively small inlet openings 22a,22b,. via which relatively warm air will enter, which is next exhausted by a ventilator 11. This warm air dries the manure, spread out over the conveyor track 5. Because of the fact that the inlet openings are chosen relatively small, an under-pressure will be created in exhaust duck 4, which will support the drying process. At the end of exhaust duck 4 a known measuring device 23 is placed, which measures the moisture content of the manure which has been dried meanwhile. In a further obvious manner, motor 21 is steered dependent upon the moisture content, in a pursue to maintain the moisture content within a range of for example 30-40%.

Fig. 5B schematically represents in side view a central exhaust duct 4 provided with a conveyor track 5, in which by way of illustration the sidewall of the exhaust duck is removed. In this embodiment, conveyor track 5 is a worm 26 which runs inside a half open channel 27 and which is driven by a motor 21. Moreover the inlet openings 22a,22b,.. are visible, via which relatively warm air will enter, which is next exhausted by a ventilator 11. At the end of exhaust duck 4 the known measuring device 23 is placed. The dried manure falls out of half open channel 27 into a chute 25, where it can be packed for example into sacks.

## Claims

1. System for thicking and drying manure, originating from a shed or sty, comprising a separator for separating a relatively thick component and a relatively thin component of the manure and a drier for drying the relatively thick component at least substantially with heat released in the shed or sty, **characterised in that** the separator comprises a laminated thickener, through which a flow of manure is fed from a bottom side towards a top side.

2. System according to claim 1, **characterised in that** the laminated thickener is provided with vibrating means.

3. System according to claim 2, **characterised in that** the bottom side of the laminated thickener ends in a point and is provided with a valve.

4. System according to claim 3, **characterised in that** the vibrating means comprise a vibrating plate, located near the pointed end of the bottom side and drive means, located outside the laminated thickener.

5. System according to claim 4, **characterised in that** under operational conditions, the vibrating plate is mounted in an at least substantially horizontal position.

6. System according to claim 3, 4 or 5, **characterised in that** the valve is connected to a buffer space for thickened manure.

7. System according to claim 6, **characterised in that** means of transport are provided for transporting the thickened manure towards a conveyor track.

8. System according to claim 7, **characterised in that** the conveyor track is placed inside a central exhaust duct in the shed or sty.

9. System according to claim 8, **characterised in that** the central exhaust duct is provided with a measuring device for measuring a moisture content of the manure and with drive means, controlled by the measuring device.

10. Method for thicking manure, **characterised in that** the manure is fed through a laminated thickener from a bottom side towards a top side, during which a vibrating plate is active for setting free solid layers of manure which stick to the laminated thickener and for further thicking the thick component thus obtained, after which the thick component is placed onto a conveyor track and fed trough a central duct system.
